# EUROPEAN PATENT SPECIFICATION

(11) **EP 3 471 010 B1**
(45) Date of publication and mention of the grant of the patent: **06.04.2022**
(21) Application number: 18194781.3
(22) Date of filing: 17.09.2018
(51) Int. Cl.: G06F 21/62

(54) **GENERIC RUNTIME PROTECTION FOR TRANSACTIONAL DATA**
GENERISCHER LAUFZEITSCHUTZ FÜR TRANSAKTIONSDATEN
PROTECTION D'EXÉCUTION GÉNÉRIQUE POUR DES DONNÉES DE TRANSACTION

(30) Priority: 12.10.2017 US 201715782222
(43) Date of publication of application: 17.04.2019
(73) Proprietor: SAP SE, 69190 Walldorf (DE)
(72) Inventor: SCHUKOVETS, Igor, 69190 Walldorf (DE); LOMBARDO, Salvatore, 69190 Walldorf (DE); TIELSCH, Gregor, 69190 Walldorf (DE); KRASINSKIY, Alexander, 69190 Walldorf (DE); SCHMIDT, Guenter, 69190 Walldorf (DE); HERMANNS, Marcel, 69190 Walldorf (DE); HARTMANN, Nils, 69190 Walldorf (DE); ZIEGLER, Marco, 69190 Walldorf (DE)
(74) Representative: Müller-Boré & Partner Patentanwälte PartG mbB

(56) References cited:
- US-A1- 2011 231 889
- US-A1- 2013 325 841
- US-A1- 2015 020 215

## Description

### TECHNICAL FIELD

The subject matter disclosed herein generally relates to runtime protection for transactional data. Specifically, the present disclosure addresses systems and methods to introduce a generic runtime protection for transactional data.

### BACKGROUND

Protection for data in database tables is provided at the application layer. Applications retrieve data from database tables, then filter the retrieved data to provide only permitted data to a user. Different applications may have different implementations of protective filters.

US 2013/325841 A1 relates to a technique for a database server to identify a query that comprises an access check operator specifying a data access control policy, and if so, to re-write the query to produce an optimized query execution plan. A specific technique rewrites the query that comprises the access check operator specifying one or more database table columns that store row-specific access control lists. The rewritten query is used to generate a query execution plan that provides for several query execution optimizations.

Thus, according to an aspect, the problem relates to how to efficiently control access to database tables.

This problem is solved by the subject-matter of the independent claims. Preferred embodiments are defined in the dependent claims.

### BRIEF DESCRIPTION OF THE DRAWINGS

Some embodiments are illustrated by way of example and not limitation in the figures of the accompanying drawings.
FIG. 1 is a network diagram illustrating a network environment suitable for implementing generic runtime protection for transactional data, according to some example embodiments.
FIG. 2 is a block diagram of a database server, according to some example embodiments, suitable for implementing generic runtime protection for transactional data.
FIG. 3 is a block diagram illustrating communication flows suitable for implementing generic runtime protection for transactional data, according to some example embodiments.
FIG. 4 is a block diagram illustrating a database schema suitable for implementing generic runtime protection for transactional data, according to some example embodiments.
FIG. 5 is a flowchart illustrating operations of a method suitable for implementing generic runtime protection for transactional data, according to some example embodiments.
FIG. 6 is a flowchart illustrating operations of a method suitable for implementing generic runtime protection for transactional data, according to some example embodiments.
FIG. 7 is a flowchart illustrating operations of a method suitable for implementing generic runtime protection for transactional data, according to some example embodiments.
FIG. 8 is a block diagram illustrating components of a machine, according to some example embodiments.

### DETAILED DESCRIPTION

Example methods and systems are directed to generic runtime protection for transactional data. Transactional data is stored in database tables. Runtime protection for transactional data ensures that transactional data is only accessed by authorized users during execution of a query for the transactional data. Thus, runtime protection is distinguished from application-layer protection, which protects data in the application layer after the query for the transactional data has provided both permitted and blocked data. Master data is also stored in database tables, but is distinguished from transactional data by virtue of the master data in the tables being accessible to all users. Example master data includes an organization's name and address. Example attributes of transactional data includes an organization's bank account number and invoice amounts.

Generic runtime protection for transactional data may be provided by extending the structure database tables containing transactional data to include a field that indicates a blocking status for each row. When a query is executed, rows that are blocked for the querying user are not returned even if they are responsive to the query.

According to various example embodiments, one or more of the methodologies described herein may facilitate generic runtime protection for transactional data. Compared with prior art methods of individually modifying database tables, individually creating access control list (ACL) functions to protect data, and individually modifying applications to handle protected data, the proposed methods reduce software development time and thus processor cycles and power consumption. Additionally, automating and centralizing the handling of protected data reduces the chance for erroneously providing protected data to an unauthorized receiver, improving the effectiveness of the GDPR compliance and reducing the total cost of ownership of GDPR-compliant systems.

When these effects are considered in aggregate, one or more of the methodologies described herein may obviate a need for certain efforts or resources that otherwise would be involved in providing runtime protection for transactional data. Computing resources used by one or more machines, databases, or devices (e.g., within the network environment 100) may similarly be reduced. Examples of such computing resources include processor cycles, network traffic, memory usage, data storage capacity, power consumption, and cooling capacity.

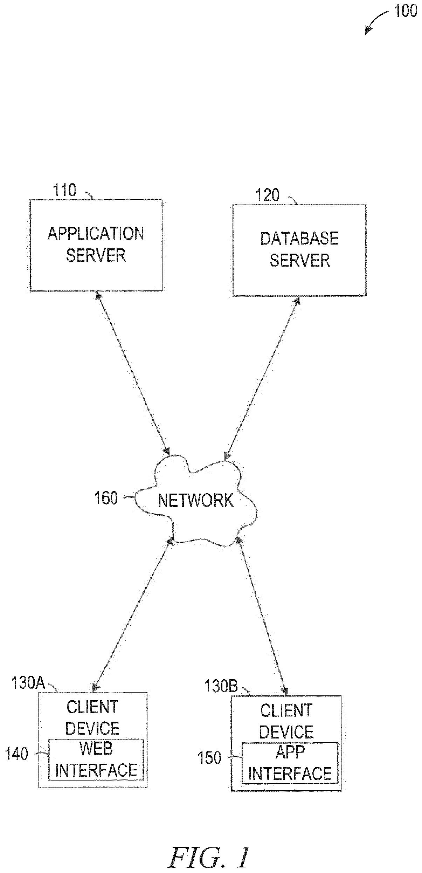

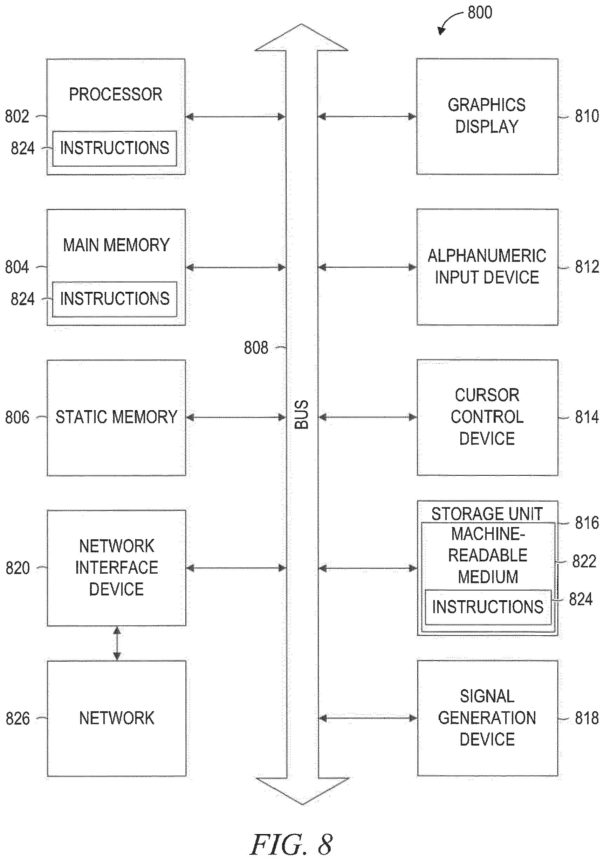

FIG. 1 is a network diagram illustrating a network environment 100 suitable for implementing generic runtime protection for transactional data, according to some example embodiments. The network environment 100 includes an application server 110, a database server 120, client devices 130A and 130B, and a network 160. The application server 110 provides an application to the client devices 130A and 130B via a web interface 140 or an application interface 150. The application makes use of data provided by the database server 120. The client device 130A allows a user to interact with the application through the web interface 140. The client device 130B allows a user to interact with the application through the application interface 150. The application server 110, the database server 120, and the client devices 130A and 130B may each be implemented in a computer system, in whole or in part, as described below with respect to FIG. 8.

Any of the machines, databases, or devices shown in FIG. 1 may be implemented in a general-purpose computer modified (e.g., configured or programmed) by software to be a special-purpose computer to perform the functions described herein for that machine, database, or device. For example, a computer system able to implement any one or more of the methodologies described herein is discussed below with respect to FIG. 8. As used herein, a "database" is a data storage resource and may store data structured as a text file, a table, a spreadsheet, a relational database (e.g., an object-relational database), a triple store, a hierarchical data store, a document-oriented NoSQL database, a file store, or any suitable combination thereof. The database may be an in-memory database. Moreover, any two or more of the machines, databases, or devices illustrated in FIG. 1 may be combined into a single machine, database, or device, and the functions described herein for any single machine, database, or device may be subdivided among multiple machines, databases, or devices.

The application server 110, the database server 120, and the client devices 130A-130B may be connected by the network 160. The network 160 may be any network that enables communication between or among machines, databases, and devices. Accordingly, the network 160 may be a wired network, a wireless network (e.g., a mobile or cellular network), or any suitable combination thereof. The network 160 may include one or more portions that constitute a private network, a public network (e.g., the Internet), or any suitable combination thereof.

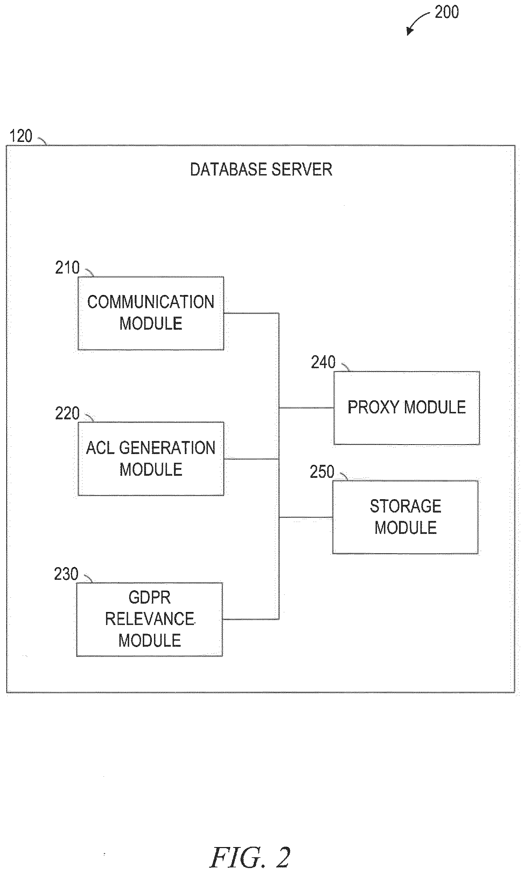

FIG. 2 is a block diagram 200 illustrating components of the database server 120, according to some example embodiments. The database server 120 is shown as including a communication module 210, an ACL generation module 220, a generic data privacy and protection (GDPR) relevance module 230, a proxy module 240, and a storage module 250, all configured to communicate with each other (e.g., via a bus, shared memory, or a switch). Any one or more of the modules described herein may be implemented using hardware (e.g., a processor of a machine). For example, any module described herein may be implemented by a processor configured to perform the operations described herein for that module. Moreover, any two or more of these modules may be combined into a single module, and the functions described herein for a single module may be subdivided among multiple modules. Furthermore, according to various example embodiments, modules described herein as being implemented within a single machine, database, or device may be distributed across multiple machines, databases, or devices.

The communication module 210 receives data sent to the database server 120 and transmits data from the database server 120. For example, the communication module 210 may receive, from the application server 110, a structured query language (SQL) query. The communication module 210 may provide the query to the proxy module 240, which resolves the query using the GDPR relevance module 230 and the storage module 250, and provides responsive data. The communication module 210 may transmit the responsive data to the application server 110. Communications sent and received by the communication module 210 may be intermediated by the network 160.

The GDPR relevance module 230 may generate a list of tables in a database, along with an indicator for each table that indicates whether the table is relevant to GDPR. Alternatively, the GDPR relevance module 230 may generate a list that includes only tables relevant to GDPR. The list of GDPR-relevant tables may be provided to the ACL generation module 220. In some example embodiments, an administrator provides a list of fields to the GDPR relevance module 230. In these example embodiments, the GDPR relevance module 230 adds tables to the list of GDPR-relevant tables (or sets the indicator for the table) when the table has one or more of the listed fields. For example, the list of fields may be "Supplier, Vendor, Customer, Employee ID, Name, Bank Account, Credit Card Number," and all tables including at least one of the listed fields may be included in a list of tables to be provided to the ACL generation module 220. Tables not including the listed fields may be excluded from the list of tables.

The ACL generation module 220 introduces protections to tables. For example, a list of tables generated by the GDPR relevance module 230 may be provided to the ACL generation module 220. The ACL generation module 220 generates generic ACL for each table in the list that, when executed, adds a blocking indicator field to the table.

The proxy module 240 determines if rows of the database are permitted to be provided in response to a query, based on an authorization level of the query and the blocking indicator fields. For example, queries generated by ordinary users may have a low authorization level. Rows lacking blocking indicator fields or having blocking indicator fields that indicate that the rows are not blocked may be returned in response to the query with the low authorization level. Rows having blocking indicator fields that indicate that the rows are blocked may be prevented from being returned in response to the query with the low authorization level. As another example, queries generated by auditors or administrators may have a high authorization level. All rows matching the query may be returned in response to the query with the high authorization level.

The storage module 250 accesses the data in the database. For example, a purchase order table, a supplier table, a customer table, or any suitable combination thereof may be stored by the storage module 250. The storage module 250 may accept connection attempts only from the proxy module 240, ensuring that all database accesses will properly honor the blocking indicator fields.

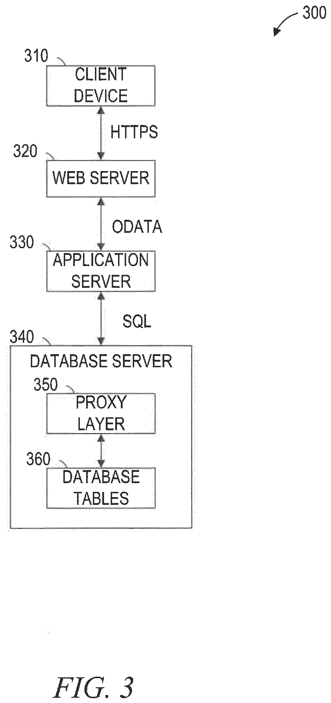

FIG. 3 is a block diagram 300 illustrating communication flows suitable for implementing generic runtime protection for transactional data, according to some example embodiments. The block diagram 300 includes a client device 310, a web server 320, an application server 330, and a database server 340. The database server 340 includes a proxy layer 350 and database tables 360.

As shown in the block diagram 300, the client device 310 (e.g., the client device 130A) communicates with the web server 320 using the secure hypertext transfer protocol (HTTPS). The web server 320 communicates with the application server 330 (e.g., the application server 110) using the open data (OData) protocol. The application server 330 communicates with the database server 340 (e.g., the database server 120) using SQL.

For example, the web server 320 may provide a hypertext markup language (HTML) query interface to a user of the client device 310. The user enters parameters for a query which are transmitted from the client device 310 to the web server 320. The web server 320 processes the user data to form a request for data from the application server 330. The application server 330 generates an SQL query and transmits the SQL query to the database server 340. Within the database server 340, the SQL query is first processed (and possibly modified) by the proxy layer 350. The SQL query is then provided by the proxy layer 350 to the database tables 360 for resolution. The SQL query may include an identifier of the user. The database server 340 may use the user identifier to determine if the user is part of an authorization group. If the user is part of an authorization group, the user may be treated as an authorized user, permitted to access protected data. Accordingly, the SQL query may be processed with a high authorization level. If the user is not part of an authorization group, the SQL query may be processed with a lower authorization level and denied access to protected data. By interjecting the proxy layer 350 between the application server 330 and the database tables 360, GDPR compliance functions may be executed, ensuring that only authorized users are able to access protected data.

In some example embodiments, checking the value of the blocking indicator is performed by the application server 330 instead of the proxy layer 350, which may be absent. As long as the application server 330 is secure, exposing the protected data to the application server 330 does not compromise the protected data.

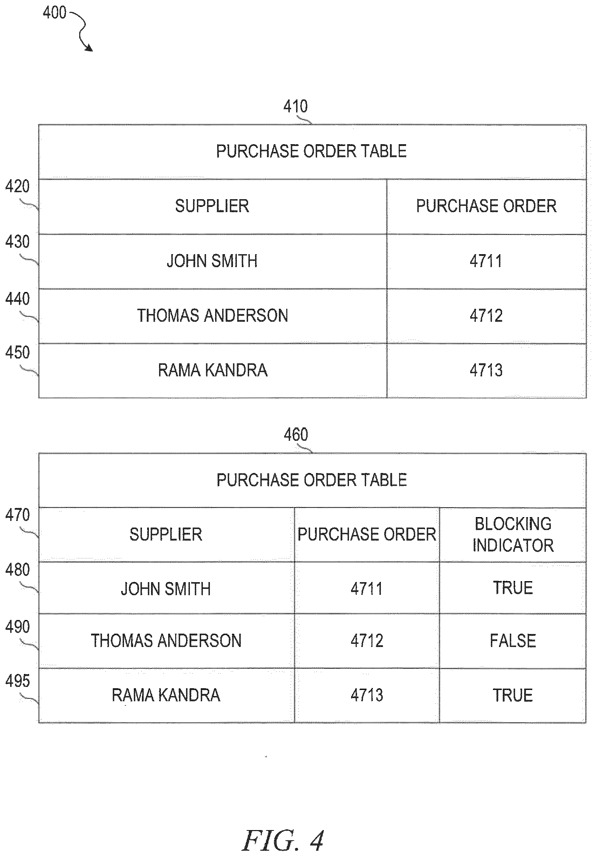

FIG. 4 is a block diagram illustrating a database schema 400 suitable for implementing generic runtime protection for transactional data, according to some example embodiments. The database schema 400 includes a purchase order table 410, prior to being modified to support GDPR, and a purchase order table 460, after being modified to support GDPR. The purchase order table 410 has rows 430, 440, and 450 of a format 420. The purchase order table 460 has rows 480, 490, and 495 of a format 470.

The format 420 of the purchase order table 410 includes a supplier field and a purchase order field. Accordingly, each of the rows 430-450 identifies a supplier and a purchase order. The format 470 of the purchase order table 460 includes the supplier field, the purchase order field, and a blocking indicator field. Each of the rows 480-495 indicates whether access to the row is blocked in addition to identifying a supplier and a purchase order. Thus, a proxy layer of a database server can prevent an SQL query from returning blocked rows based on the blocking indicator field of those rows.

In some example embodiments, the blocking indicator field is a Boolean field. The Boolean field may be set to false if the row is accessible to all users and set to true if the row is only accessible to authorized users. In other example embodiments, the blocking indicator field is a numeric field. The numeric field may be set to 0 if the row is accessible to all users, set to a predetermined value if the row is only accessible to administrators, and set to a value of a user identifier if the row is accessible to a corresponding user and to administrators.

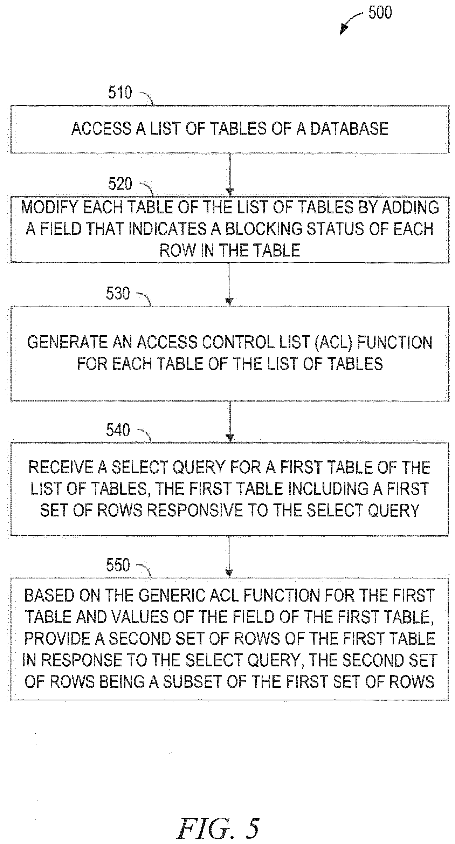

FIG. 5 is a flowchart illustrating operations of a method 500 suitable for implementing generic runtime protection for transactional data, according to some example embodiments. The method 500 includes operations 510, 520, 530, 540, and 550. By way of example and not limitation, the method 500 is described as being performed by the devices, modules, and databases of FIGS. 1-4.

In operation 510, the GDPR relevance module 230 accesses a list of tables of a database. For example, an administrator may generate a list of tables that contain data subject to blocking for compliance with GDPR.

The GDPR relevance module 230 modifies each table of the list of tables by adding a field that indicates a blocking status of each row in the table, in operation 520. For example, the purchase order table 410 (shown in FIG. 4) may be modified to the purchase order table 460.

In operation 530, the ACL generation module 220 generates a generic ACL function for each table of the list of tables. ACL functions similar to the example below are created in some example embodiments. In the example below, select access is granted to the table tablename on rows that are not blocked for all users and on rows that are blocked if the authorization of the request matches a predetermined value (e.g., if the select request comes from an administrator or auditor).

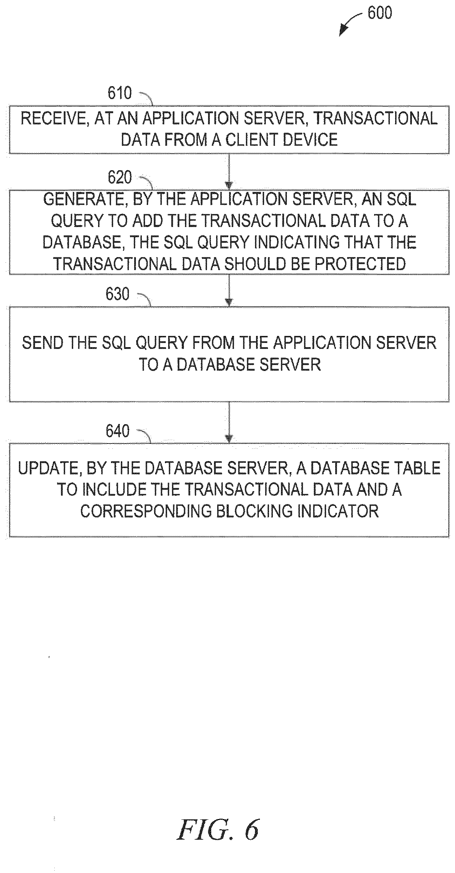

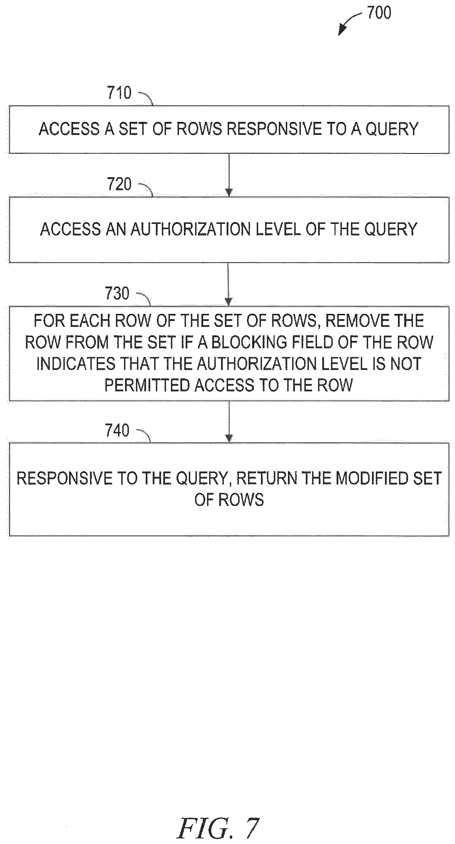

```
 define role GDPRRT_tablename {
       grant select on <tablename>
       // consider GDPR runtime protection by BlockingIndicator:
       where Blockinglndicator = " //when instance isn't blocked
             or (Blockinglndicator = 'X'
             and () = aspect pfcg_auth ( <AuthorizationObject>, actvt = '03')); }
```

In some example embodiments, the proxy module 240 generates and applies a proxy object for some or all of the tables of the list of tables. In these example embodiments, the generated ACL for the table will be associated with the proxy object. Use of a proxy object for a table may unify data access to the table by multiple applications. An example proxy object definition below defines a view "PURGDOC" for a Purchasing Document Header Table.

```
 @ClientHandling.algorithm: #SESSION_VARIABLE
 @AbapCatalog.sqlViewName: 'PURGDOCROW'
       -- Define the name of the proxy view as PURGDOCROW
 @AccessControl.authorizationCheck:#CHECK
       -- Perform access control
 @ObjectModel: {
       representativeKey: 'ebeln', -- Primary key for the proxy view
       usageType.serviceQuality: #A,
       usageType.sizeCatagory: #L,
       usageType.dataClass: #TRANSACTIONAL
 define view PURGDOC as select from PurchasingDocumentHeader {
       ∗
 }
```

In operation 540, the proxy module 240 receives a select query for a first table of the list of tables, the first table including a first set of rows responsive to the select query. For example, the name of the purchase order table 460 may be PURCHASE_ORDER and the SQL query "SELECT ^{∗} FROM PURCHASE_ORDER" may be received by the proxy module 240. In this example, the rows 480, 490, and 495 are responsive to the query.

In operation 550, the proxy module 240 in conjunction with the storage module 250 provides, based on the generic ACL function for the first table and values of the field that indicates the blocking status, a second set of rows of the first table in response to the select query, the second set of rows being a subset of the first set of rows. For example, the query may be received from a user (e.g., a user of the client device 310 of FIG. 3) lacking authorization for the blocked rows. In this example, the proxy module 240 causes the storage module 250 to execute the generic ACL function for the PURCHASE_ORDER table, denying select access to rows in the PURCHASE_ORDER table that have the BlockingIndicator field set to TRUE. Thus, the set of rows returned from the storage module 250 to the proxy module 240 is only the row 490, a subset of the rows responsive to the query. The proxy module 240 may then pass the returned set of rows to the requester (e.g., to the application server 330 for further processing before eventual display of results to a user of the client device 310).

FIG. 6 is a flowchart illustrating operations of a method 600 suitable for implementing generic runtime protection for transactional data, according to some example embodiments. By way of example and not limitation, the method 600 is described as being performed by the devices, modules, and databases of FIGS. 1-4.

In operation 610, the application server 330 receives transactional data from the client device 310 (e.g., via the web server 320). For example, an accountant for a business may enter invoice data into a web interface, for storage in a database.

The application server 330 generates, in operation 620, an SQL query to add the transactional data to a database (e.g., a database comprising the database tables 360). The SQL query indicates that the transactional data should be protected. For example, the SQL query may be an SQL insert query in which a value for the blocking indicator is specified as "true."

In operation 630, the application server 330 sends the SQL query to the database server 340. The database server 340, in operation 640, updates a database table to include the transactional data and a corresponding blocking indicator. For example, a row may be added to the purchase order table 460 that includes the transactional data and a value of "true" for the blocking indicator.

FIG. 7 is a flowchart illustrating operations of a method 700 suitable for implementing generic runtime protection for transactional data, according to some example embodiments. By way of example and not limitation, the method 700 is described as being performed by the devices and modules of FIGS. 1-3.

In operation 710, the proxy module 240 accesses a set of rows responsive to a query. For example, the proxy layer 350 of the database server 340 may have received an SQL query from the application server 330 and executed the SQL query against the database tables 360, generating a result set of rows.

As shown in operation 720, the proxy module 240 accesses an authorization level of the query. For example, the application server 330 may have provided an authorization level with the query. As another example, the application server 330 may have provided credentials (e.g., a username and password) that may be used by the proxy module 240 to determine the authorization level.

The proxy module 240 then removes each row of the set of rows that has a blocking field that indicates that the authorization level is not permitted access to the row (see operation 730). For example, a first row may be accessible to all users and never removed in operation 730. A second row may be accessible to administrators only and removed in operation 730 if the authorization level is not an administrator authorization level. A third row may be accessible to a particular non-administrator user (e.g., containing data for that user) and to administrators. The third row is removed in operation 730 if the authorization level does not correspond to the particular non-administrator user or an administrator.

In operation 740, the proxy module 240 responds to the query by returning the modified set of rows. Thus, in the method 700, blocked rows are removed by the proxy module 240 after the query executes unless access is permitted based on the authorization level. By contrast, in the method 500, blocked rows are prevented from being provided to the proxy module 240 by execution of a ACL function that blocks select access to the blocked rows.

FIG. 8 is a block diagram illustrating components of a machine 800, according to some example embodiments, able to read instructions from a machine-readable medium (e.g., a machine-readable storage medium, a computer-readable storage medium, or any suitable combination thereof) and perform any one or more of the methodologies discussed herein, in whole or in part. Specifically, FIG. 8 shows a diagrammatic representation of the machine 800 in the example form of a computer system within which instructions 824 (e.g., software, a program, an application, an applet, an app, or other executable code) for causing the machine 800 to perform any one or more of the methodologies discussed herein may be executed, in whole or in part. In alternative embodiments, the machine 800 operates as a standalone device or may be connected (e.g., networked) to other machines. In a networked deployment, the machine 800 may operate in the capacity of a server machine or a client machine in a server-client network environment, or as a peer machine in a distributed (e.g., peer-to-peer) network environment. The machine 800 may be a server computer, a client computer, a personal computer (PC), a tablet computer, a laptop computer, a netbook, a set-top box (STB), a personal digital assistant (PDA), a cellular telephone, a smartphone, a web appliance, a network router, a network switch, a network bridge, or any machine capable of executing the instructions 824, sequentially or otherwise, that specify actions to be taken by that machine. Further, while only a single machine is illustrated, the term "machine" shall also be taken to include a collection of machines that individually or jointly execute the instructions 824 to perform all or part of any one or more of the methodologies discussed herein.

The machine 800 includes a processor 802 (e.g., a central processing unit (CPU), a graphics processing unit (GPU), a digital signal processor (DSP), an application-specific integrated circuit (ASIC), a radio-frequency integrated circuit (RFIC), or any suitable combination thereof), a main memory 804, and a static memory 806, which are configured to communicate with each other via a bus 808. The machine 800 may further include a graphics display 810 (e.g., a plasma display panel (PDP), a light-emitting diode (LED) display, a liquid crystal display (LCD), a projector, or a cathode ray tube (CRT)). The machine 800 may also include an alphanumeric input device 812 (e.g., a keyboard), a cursor control device 814 (e.g., a mouse, a touchpad, a trackball, a joystick, a motion sensor, or another pointing instrument), a storage unit 816, a signal generation device 818 (e.g., a speaker), and a network interface device 820.

The storage unit 816 includes a machine-readable medium 822 on which are stored the instructions 824 embodying any one or more of the methodologies or functions described herein. The instructions 824 may also reside, completely or at least partially, within the main memory 804, within the processor 802 (e.g., within the processor's cache memory), or both, during execution thereof by the machine 800. Accordingly, the main memory 804 and the processor 802 may be considered as machine-readable media. The instructions 824 may be transmitted or received over a network 826 via the network interface device 820.

As used herein, the term "memory" refers to a machine-readable medium able to store data temporarily or permanently and may be taken to include, but not be limited to, random-access memory (RAM), read-only memory (ROM), buffer memory, flash memory, and cache memory. While the machine-readable medium 822 is shown, in an example embodiment, to be a single medium, the term "machine-readable medium" should be taken to include a single medium or multiple media (e.g., a centralized or distributed database, or associated caches and servers) able to store instructions. The term "machine-readable medium" shall also be taken to include any medium, or combination of multiple media, that is capable of storing instructions for execution by a machine (e.g., the machine 800), such that the instructions, when executed by one or more processors of the machine (e.g., the processor 802), cause the machine to perform any one or more of the methodologies described herein. Accordingly, a "machine-readable medium" refers to a single storage apparatus or device, as well as "cloud-based" storage systems or storage networks that include multiple storage apparatus or devices. The term "machine-readable medium" shall accordingly be taken to include, but not be limited to, one or more data repositories in the form of a solid-state memory, an optical medium, a magnetic medium, or any suitable combination thereof.

Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may be implemented as a combined structure or component. Similarly, structures and functionality presented as a single component may be implemented as separate components. These and other variations, modifications, additions, and improvements fall within the scope of the subject matter herein.

Certain embodiments are described herein as including logic or a number of components, modules, or mechanisms. Modules may constitute either software modules (e.g., code embodied on a machine-readable medium or in a transmission signal) or hardware modules. A "hardware module" is a tangible unit capable of performing certain operations and may be configured or arranged in a certain physical manner. In various example embodiments, one or more computer systems (e.g., a standalone computer system, a client computer system, or a server computer system) or one or more hardware modules of a computer system (e.g., a processor or a group of processors) may be configured by software (e.g., an application or application portion) as a hardware module that operates to perform certain operations as described herein.

In some embodiments, a hardware module may be implemented mechanically, electronically, or any suitable combination thereof. For example, a hardware module may include dedicated circuitry or logic that is permanently configured to perform certain operations. For example, a hardware module may be a special-purpose processor, such as a field-programmable gate array (FPGA) or an ASIC. A hardware module may also include programmable logic or circuitry that is temporarily configured by software to perform certain operations. For example, a hardware module may include software encompassed within a general-purpose processor or other programmable processor. It will be appreciated that the decision to implement a hardware module mechanically, in dedicated and permanently configured circuitry, or in temporarily configured circuitry (e.g., configured by software) may be driven by cost and time considerations.

Accordingly, the phrase "hardware module" should be understood to encompass a tangible entity, be that an entity that is physically constructed, permanently configured (e.g., hardwired), or temporarily configured (e.g., programmed) to operate in a certain manner or to perform certain operations described herein. As used herein, "hardware-implemented module" refers to a hardware module. Considering embodiments in which hardware modules are temporarily configured (e.g., programmed), each of the hardware modules need not be configured or instantiated at any one instance in time. For example, where a hardware module comprises a general-purpose processor configured by software to become a special-purpose processor, the general-purpose processor may be configured as respectively different special-purpose processors (e.g., comprising different hardware modules) at different times. Software may accordingly configure a processor, for example, to constitute a particular hardware module at one instance of time and to constitute a different hardware module at a different instance of time.

Hardware modules can provide information to, and receive information from, other hardware modules. Accordingly, the described hardware modules may be regarded as being communicatively coupled. Where multiple hardware modules exist contemporaneously, communications may be achieved through signal transmission (e.g., over appropriate circuits and buses) between or among two or more of the hardware modules. In embodiments in which multiple hardware modules are configured or instantiated at different times, communications between such hardware modules may be achieved, for example, through the storage and retrieval of information in memory structures to which the multiple hardware modules have access. For example, one hardware module may perform an operation and store the output of that operation in a memory device to which it is communicatively coupled. A further hardware module may then, at a later time, access the memory device to retrieve and process the stored output. Hardware modules may also initiate communications with input or output devices, and can operate on a resource (e.g., a collection of information).

The various operations of example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions described herein. As used herein, "processor-implemented module" refers to a hardware module implemented using one or more processors.

Similarly, the methods described herein may be at least partially processor-implemented, a processor being an example of hardware. For example, at least some of the operations of a method may be performed by one or more processors or processor-implemented modules. Moreover, the one or more processors may also operate to support performance of the relevant operations in a "cloud computing" environment or as a "software as a service" (SaaS). For example, at least some of the operations may be performed by a group of computers (as examples of machines including processors), with these operations being accessible via a network (e.g., the Internet) and via one or more appropriate interfaces (e.g., an application programming interface (API)).

The performance of certain of the operations may be distributed among the one or more processors, not only residing within a single machine, but deployed across a number of machines. In some example embodiments, the one or more processors or processor-implemented modules may be located in a single geographic location (e.g., within a home environment, an office environment, or a server farm). In other example embodiments, the one or more processors or processor-implemented modules may be distributed across a number of geographic locations.

Some portions of the subject matter discussed herein may be presented in terms of algorithms or symbolic representations of operations on data stored as bits or binary digital signals within a machine memory (e.g., a computer memory). Such algorithms or symbolic representations are examples of techniques used by those of ordinary skill in the data processing arts to convey the substance of their work to others skilled in the art. As used herein, an "algorithm" is a self-consistent sequence of operations or similar processing leading to a desired result. In this context, algorithms and operations involve physical manipulation of physical quantities. Typically, but not necessarily, such quantities may take the form of electrical, magnetic, or optical signals capable of being stored, accessed, transferred, combined, compared, or otherwise manipulated by a machine. It is convenient at times, principally for reasons of common usage, to refer to such signals using words such as "data," "content," "bits," "values," "elements," "symbols," "characters," "terms," "numbers," "numerals," or the like. These words, however, are merely convenient labels and are to be associated with appropriate physical quantities.

Unless specifically stated otherwise, discussions herein using words such as "processing," "computing," "calculating," "determining," "presenting," "displaying," or the like may refer to actions or processes of a machine (e.g., a computer) that manipulates or transforms data represented as physical (e.g., electronic, magnetic, or optical) quantities within one or more memories (e.g., volatile memory, non-volatile memory, or any suitable combination thereof), registers, or other machine components that receive, store, transmit, or display information. Furthermore, unless specifically stated otherwise, the terms "a" or "an" are herein used, as is common in patent documents, to include one or more than one instance. Finally, as used herein, the conjunction "or" refers to a nonexclusive "or," unless specifically stated otherwise.

## Claims

1. A method comprising:
accessing (510), by one or more processors, a list of tables (410) of a database;
modifying (520), by the one or more processors, each table of the list of tables by adding a field that indicates a blocking status of each row in the table (460);
generating (530), by the one or more processors, a generic access control list, ACL, function for each table of the list of tables, the generic ACL function granting or blocking a select access to rows of the table;
receiving (540), by the one or more processors, a select query for a first table of the list of tables, the first table including a first set of rows responsive to the select query;
determining an authorization level for the select query;
executing (550) the generic ACL function for the first table, wherein based on values of the field of the first table that indicates the blocking status, and the authorization level, the generic ACL function grants or blocks a select access to the first set of rows for providing a second set of rows of the first table in response to the select query, the second set of rows being a subset of the first set of rows; and
returning the second set of rows.

2. The method of claim 1, wherein the field added to each table of the list of tables is a Boolean field.

3. The method of claim 1 or 2, wherein the providing of the second set of rows comprises:
providing all rows of the first set of rows that have a value of the field that indicates that the row is not blocked; and
based on the authorization level, excluding all rows of the first set of rows that have a value of the field that indicates that the row is blocked.

4. The method of claim 1 or 2, wherein the providing of the second set of rows comprises:
providing all rows of the first set of rows that have a value of the field that indicates that the row is not blocked; and
based on the authorization level, including all rows of the first set of rows that have a value of the field that indicates that the row is blocked.

5. The method of any one of claims 1 to 4, wherein:
the select query is associated with a user; and
the authorization level is based on the user belonging to an authorization group.

6. The method of any one of claims 1 to 4, wherein:
the select query is associated with a user; and
the authorization level is based on the user being excluded from an authorization group.

7. The method of any one of claims 1 to 6, further comprising:
based on the first table being included in the list of tables, generating a proxy object for the first table.

8. The method of claim 7, wherein only the proxy object is permitted to access the first table.

9. A non-transitory machine-readable storage medium comprising instructions that, when executed by one or more processors of a machine, cause the machine to perform operations according to the method of any one of claims 1 to 8.

10. A system comprising:
a memory that stores instructions; and
one or more processors configured by the instructions to perform operations according to the method of any one of claims 1 to 8.

## Patentansprüche

1. Ein Verfahren, das Folgendes umfasst:
Zugreifen (510), durch einen oder mehrere Prozessoren, auf eine Liste von Tabellen (410) einer Datenbank;
Modifizieren (520), durch den einen oder die mehreren Prozessoren, jeder Tabelle der Tabellenliste durch Hinzufügen eines Feldes, das einen Blockierstatus jeder Zeile in der Tabelle (460) anzeigt;
Erzeugen (530), durch den einen oder die mehreren Prozessoren, einer generischen Zugriffskontrolllisten *(Access Control List* - ACL) - Funktion für jede Tabelle der Liste von Tabellen, wobei die generische ACL-Funktion einen Select- bzw. Auswahl-Zugriff *(select* access) auf Zeilen der Tabelle gewährt oder sperrt;
Empfangen (540), durch den einen oder die mehreren Prozessoren, einer Select- bzw. Auswahl-Abfrage *(select query)* für eine erste Tabelle der Tabellenliste, wobei die erste Tabelle einen ersten Satz von Zeilen bzw. Zeilensatz enthält, die auf die Select-Abfrage reagieren;
Bestimmen einer Berechtigungsstufe für die Select-Abfrage;
Ausführen (550) der generischen ACL-Funktion für die erste Tabelle, wobei, auf der Grundlage von Werten des Feldes der ersten Tabelle, das den Blockierstatus anzeigt, und der Berechtigungsstufe, die generische ACL-Funktion einen Select-Zugriff auf den ersten Satz von Zeilen gewährt oder blockiert, um einen zweiten Satz von Zeilen der ersten Tabelle in Reaktion auf die Select-Abfrage bereitzustellen, wobei der zweite Zeilensatz eine Teilmenge des ersten Zeilensatzes ist; und
Rückgabe des zweiten Zeilensatzes.

2. Das Verfahren nach Anspruch 1, wobei das zu jeder Tabelle der Tabellenliste hinzugefügte Feld ein Feld vom Typ *Boolean* ist.

3. Das Verfahren nach Anspruch 1 oder 2, wobei das Bereitstellen des zweiten Zeilensatzes Folgendes umfasst:
Bereitstellen aller Zeilen des ersten Zeilensatzes, die einen Wert des Feldes haben, der anzeigt, dass die Zeile nicht gesperrt ist; und
auf der Grundlage der Berechtigungsstufe Ausschließen aller Zeilen des ersten Zeilensatzes, die einen Wert des Feldes haben, der anzeigt, dass die Zeile gesperrt ist.

4. Das Verfahren nach Anspruch 1 oder 2, wobei das Bereitstellen des zweiten Zeilensatzes Folgendes umfasst:
Bereitstellen aller Zeilen des ersten Zeilensatzes, die einen Wert des Feldes haben, der anzeigt, dass die Zeile nicht gesperrt ist; und
auf der Grundlage der Berechtigungsstufe, Einbeziehen aller Zeilen des ersten Zeilensatzes, die einen Wert des Feldes haben, der anzeigt, dass die Zeile gesperrt ist.

5. Das Verfahren nach irgendeinem der Ansprüche von 1 bis 4, wobei:
die Select-Abfrage mit einem Benutzer verknüpft ist; und wobei
die Berechtigungsstufe darauf basiert, dass der Benutzer einer Berechtigungsgruppe zugehörig ist.

6. Das Verfahren nach irgendeinem der Ansprüche von 1 bis 4, wobei:
die Select-Abfrage mit einem Benutzer verknüpft ist; und wobei
die Berechtigungsstufe darauf basiert, dass der Benutzer von einer Berechtigungsgruppe ausgeschlossen ist.

7. Das Verfahren nach irgendeinem der Ansprüche von 1 bis 6, das ferner Folgendes umfasst:
auf der Grundlage, dass die erste Tabelle in der Liste der Tabellen enthalten ist, Erzeugen eines Proxy-Objekts für die erste Tabelle.

8. Das Verfahren nach Anspruch 7, wobei nur dem Proxy-Objekt der Zugriff auf die erste Tabelle gestattet ist.

9. Ein nicht-flüchtiges, maschinenlesbares Speichermedium, das Anweisungen umfasst, die, wenn sie von einem oder mehreren Prozessoren einer Maschine ausgeführt werden, die Maschine veranlassen, Operationen gemäß dem Verfahren nach irgendeinem der Ansprüche von 1 bis 8 durchzuführen.

10. Ein System, das Folgendes umfasst:
einen Speicher, der Anweisungen speichert; und
einen oder mehrere Prozessoren, die durch die Anweisungen dazu konfiguriert sind, Operationen gemäß dem Verfahren nach irgendeinem der Ansprüche von 1 bis 8 durchzuführen.

## Revendications

1. Un procédé comprenant le fait de :
accéder (510), par un ou plusieurs processeurs, à une liste de tables (410) d'une base de données ;
modifier (520), par le ou les processeurs, chaque table de la liste de tables en ajoutant un champ qui indique un état de blocage de chaque ligne dans la table (460) ;
générer (530), par le ou les processeurs, une fonction de liste de contrôle d'accès *(Access Control List* - ACL) générique pour chaque table de la liste de tables, la fonction ACL générique accordant ou bloquant un accès SELECT *(select* access) aux lignes de la table ;
recevoir (540), par le ou les processeurs, une requête SELECT *(select query)* pour une première table de la liste de tables, la première table incluant un premier ensemble de lignes en réponse à la requête SELECT ;
déterminer un niveau d'autorisation pour la requête SELECT ;
exécuter (550) la fonction ACL générique pour la première table, sachant que, sur la base des valeurs du champ de la première table qui indique l'état de blocage, et du niveau d'autorisation, la fonction ACL générique accorde ou bloque un accès SELECT au premier ensemble de lignes pour fournir un deuxième ensemble de lignes de la première table en réponse à la requête SELECT, le deuxième ensemble de lignes étant un sous-ensemble du premier ensemble de lignes ; et de
renvoyer le second ensemble de lignes.

2. Le procédé d'après la revendication 1, sachant que le champ ajouté à chaque table de la liste de table est un champ booléen.

3. Le procédé d'après la revendication 1 ou 2, sachant que le fait de fournir le deuxième ensemble de lignes comprend le fait de :
fournir toutes les lignes du premier ensemble de lignes qui ont une valeur du champ qui indique que la ligne n'est pas bloquée ; et de
sur la base du niveau d'autorisation, exclure toutes les lignes du premier ensemble de lignes qui ont une valeur du champ qui indique que la ligne est bloquée.

4. Le procédé d'après la revendication 1 ou 2, sachant que le fait de fournir le deuxième ensemble de lignes comprend le fait de :
fournir toutes les lignes du premier ensemble de lignes qui ont une valeur du champ qui indique que la ligne n'est pas bloquée ; et de
sur la base du niveau d'autorisation, inclure toutes les lignes du premier ensemble de lignes qui ont une valeur du champ qui indique que la ligne est bloquée.

5. Le procédé d'après l'une quelconque des revendications de 1 à 4, sachant que :
la requête SELECT est associée à un utilisateur ; et que
le niveau d'autorisation est basé sur l'appartenance de l'utilisateur à un groupe d'autorisation.

6. Le procédé d'après l'une quelconque des revendications de 1 à 4, sachant que :
la requête SELECT est associée à un utilisateur ; et que
le niveau d'autorisation est basé sur l'exclusion de l'utilisateur d'un groupe d'autorisation.

7. Le procédé d'après l'une quelconque des revendications de 1 à 6, comprenant en outre le fait de :
sur la base du fait que la première table est incluse dans la liste des tables, générer un objet proxy pour la première table.

8. Le procédé d'après la revendication 7, sachant que seul l'objet proxy est autorisé à accéder à la première table.

9. Un support de stockage lisible par machine non transitoire comprenant des instructions qui, lorsqu'elles sont exécutées par un ou plusieurs processeurs d'une machine, amènent la machine à effectuer des opérations conformes au procédé d'après l'une quelconque des revendications de 1 à 8.

10. Un système comprenant :
une mémoire qui stocke des instructions ; et
un ou plusieurs processeurs configurés par les instructions pour effectuer des opérations conformes au procédé d'après l'une quelconque des revendications de 1 à 8.
